# EUROPÄISCHE PATENTANMELDUNG

(11) **EP 2 528 070 A2**
(43) Veröffentlichungstag der Anmeldung: **28.11.2012**
(21) Anmeldenummer: 12169403.8
(22) Anmeldetag: 24.05.2012
(51) Int. Cl.: H01F 7/13

(54) **Elektromagnet mit Einstellstift**

(30) Priorität: 27.05.2011 DE 102011103845
(71) Anmelder: SVM Schultz Verwaltungs-GmbH & Co. KG, 87700 Memmingen (DE)
(72) Erfinder: Scherer, Georg, 87757 Kirchheim (DE); Mang, Helmut, 87700 Memmingen (DE); Schreiber, Florian, 89284 Kadeltshofen (DE)
(74) Vertreter: Pfister, Helmut

(57) **Zusammenfassung**

Die Erfindung betrifft einen Elektromagneten mit einer mit Strom beaufschlagbaren Spule, einem in einem Ankerraum beweglich gelagerten Anker, der durch ein sich aus der Strombeaufschlagung der Spule ergebendes Magnetfeld bewegbar ist, einem Magnetjoch, einer Ankerfeder und einem im Magnetjoch einsetzbaren Einstellstift, wobei sich die Ankerfeder einerseits am Einstellstift andererseits am Anker abstützt und über eine Eindringtiefe des Einstellstiftes in das Magnetjoch beziehungsweise den Elektromagnet die Kennlinie des Elektromagneten einstellbar ist.

## Beschreibung

Die Erfindung betrifft einen Elektromagneten mit einer Spule, einem Magnetjoch, einem Ankerraum, einem im Ankerraum beweglich gelagerten Anker, einer Ankerfeder und einem in dem Magnetjoch einsetzbaren Einstellstift.

Gattungsgemäße Elektromagneten sind oftmals Teil einer komplexen Betätigungsvorrichtung. Mit Hilfe des Elektromagneten werden dabei verschiedene Zustände der Betätigungsvorrichtung eingestellt, zum Beispiel eine Verriegelung erzeugt oder ein Druckventil bzw. Druckregelventil betätigt. Der Elektromagnet besitzt dabei eine mit Strom beaufschlagbare Spule. Bei Strombeaufschlagung resultiert ein Magnetfeld, das auf einen in dem Ankerraum des Elektromagneten, üblicherweise gegen die Kraft einer (Anker-) Feder, beweglich angeordneten magnetisierbaren Anker wirkt. Der Anker wird entsprechend des sich ergebenden Magnetfeldes bewegt.

Es sind auch sogenannte Proportionalmagnete bzw. Proportionalelektromagnete bekannt, bei welchen die Stellung des Ankers (und damit auch die Stellung des vom Anker bewegten Elementes) proportional bzw. in großen Bereichen proportional zum Stromfluss ist.

Hierdurch kann der Anker zwischen zwei oder mehreren verschiedenen Stellungen hin und her bewegt werden. Üblicherweise wirkt der Anker auf ein Betätigungsglied des Elektromagneten, zum Beispiel eine Ankerstange oder ähnliches. Je nach Ausgestaltung ist dabei das Betätigungsglied starr mit dem Anker verbunden oder aber der Anker wirkt in geeigneterweise auf ein separates gegenüber dem Anker beweglich angeordnetes Betätigungsglied. Dieses Betätigungsglied kann beispielsweise in einem Druckregelventil dazu verwendet werden, die entsprechend hierin vorgesehenen Schließglieder zu betätigen und die jeweiligen Zuflüsse bzw. Rückflüsse oder Verbraucheranschlüsse wechselweise miteinander in Verbindung zu setzen. Auch ist die Fließmenge hiermit einstellbar.

Entscheidend für die ordnungsgemäße Funktionsweise und die gewünschte Wirkung des Elektromagneten ist die Einstellung einer Kennlinie. Die Einstellung der Kennlinie erfolgt in der Regel über einen Einstellstift, der im Elektromagneten angeordnet ist. Der Einstellstift wird, bis zur letztendlichen Einstellung der gewünschten Kennlinie, in den Magneten eingepresst und wirkt dabei als Anlage für die auf den Anker wirkende Ankerfeder, die sich am Einstellstift abstützt. Je nach Eintauchtiefe des Einstellstiftes in dem Elektromagneten bzw. das hierin vorgesehene Magnetjoch, wird eine Kompression der Feder bzw. Justierung der Ankerposition durchgeführt. Hierüber kann dann eine Justierung des Ankers im Ankerraum erfolgen.

Herkömmlicherweise wird der Einstellstift in einem aufwändigen Verfahren hergestellt. Auf eine geschliffene Rundstange wird ein Konus aufgedreht, der derart bearbeitete Bereich wird dann von der geschliffenen Rundstange abgeschnitten oder abgestochen und es wird hernach eine rückseitige Bohrung in den abgetrennten Abschnitt der Rundstange eingefügt. Die zuvor geschilderte Vorgehensweise bedingt eine mehrfache Umsetzung des zu bearbeitenden Bauteil, wodurch der Herstellungsaufwand für den Einstellstift besonders hoch ist. Dies resultiert in hohen Kosten für den Einstellstift, bei welchem es sich in der Regel um einen Massenartikel handelt, da entsprechende Elektromagneten nicht ohne derartige Einstellstifte hergestellt werden können.

Aufgabe der vorliegenden Erfindung ist es, den Stand der Technik dahingehend zu verbessern, dass ein Elektromagnet mit reduziertem Herstellungsaufwand und reduzierten Kosten hergestellt werden kann.

Zur Lösung dieser Aufgabe geht die Erfindung aus von einem Elektromagneten, wie eingangs beschrieben, und schlägt vor, dass in dem Elektromagneten ein Einstellstift verwendet wird, der mittels Kaltumformung eines Vollmaterials bildbar ist.

Aufgrund der Verwendung eines, beispielsweise Kaltmassivumformungsverfahrens zur Herstellung des Einstellstiftes, werden die zuvor beschriebenen einzelnen, zeit- und kostenaufwändigen Schritte zur Herstellung des Einstellstiftes in herkömmlichen spanabhebenden Verfahren ersetzt und der Einstellstift kann in einem einzigen Arbeitsgang hergestellt werden. Im Herstellungsverfahren wird ein Rohteil in ein für die Umformung geeignetes Werkzeug eingelegt und ohne Erwärmung des Rohteils verformt. Eine derartige Verformung kann durch Einpressen eines Werkzeuges in das Rohteil erfolgen. Hierbei kann in einem (einzigen) Arbeitsgang die Schulter für das Anlegen der Ankerfeder einerseits und die rückseitige Ausnehmung im Einstellstift andererseits gebildet werden. Durch die ebenfalls durch das Umformen erzielbare Materialschwächung bzw. Materialstärkereduzierung im Umfangsbereich des Einstellstiftes wird letztendlich das gleiche Ergebnis erzielt, wie durch die im herkömmlichen Verfahren angewandte Bohrung.

Der in dem Kaltmassivumformungsverfahren hergestellte Einstellstift kann somit ebenfalls im Presssitz in ein Joch bzw. in sonstiger Weise im Elektromagneten eingesetzt werden und wird dort im Presssitz gehalten.

Die Erfindung umfasst auch die Verwendung eines in einem Kaltumformverfahren hergestellten Einstellstiftes in einem Elektromagneten, insbesondere in einem Elektromagneten wie vorbeschrieben. Zwar ist die Maßhaltigkeit eines durch eine Kaltumformung gewonnenen Einstellstiftes etwas geringer als bei einer zerspanenden Bearbeitung, allerdings werden diese erhöhten Maßtoleranzen in dem sowieso stattfindenden Einstellprozess der Kennlinie kompensiert, da die Lage des Einstellstiftes in dem Presssitz nach dem Kennlinienverlauf und nicht nach absoluter Lage des Einstellstiftes im Presssitz festgelegt wird. Überraschenderweise führt daher ein einfacher hergestelltes, in der Regel nicht so hochgenaues Bauteil nicht zu einer Verschlechterung der technischen Eigenschaften des erfindungsgemäßen Elektromagneten, weshalb insbesondere die erfindungsgemäße Verwendung vorteilhaft ist.

Der wesentliche Vorzug der Erfindung liegt somit darin, dass der Einstellstift kostengünstig zur Verfügung gestellt werden kann. Zudem ist, aufgrund der Verwendung eines Presswerkzeuges für die Umformung, gewährleistet, dass die hergestellten Einstellstifte stets gleichbleibende Qualität und Bemaßung aufweisen.

Geschickterweise weist der Vorsprung einen geringeren Durchmesser auf als der restliche Einstellstift. In Einbaurichtung gesehen, wird der Vorsprung zuerst in die den Presssitz bildende Öffnung des Joches bzw. Elektromagneten eingesetzt und der geringere Durchmesser erleichtert natürlich das Einführen des Einstellstiftes in den Presssitz.

Der Vorsprung bildet einen Dorn, auf welchen die Ankerfeder aufschiebbar ist. Insofern dient der Vorsprung auch der Führung bzw. Zentrierung der Ankerfeder.

In einer bevorzugten Ausgestaltung ist vorgesehen, dass zwischen dem zylindrischen Abschnitt und dem Vorsprung eine Anlageschulter insbesondere für die Ankerfeder vorgesehen ist. Geschickterweise ist dabei der Vorsprung als radial umlaufende Ringfläche ausgebildet, sie kann aber auch konusartig oder trichterartig geneigt sein.

Es ist von Vorteil, dass die Einformung der Ausnehmung, die Ausformung des Vorsprunges sowie der Anlageschulter in einem einzigen Arbeitsschritt der Kaltumformung, insbesondere ausgehend von einem als Abschnitt eines Profil- oder Stangenware ausgebildeten Rohteiles erfolgt. Durch geschickte Ausgestaltung des Kaltumformwerkzeuges werden zeit- und kostensparend an dem Rohteil alle notwendige Umformungen in einem einzigen Arbeitsschritt durchgeführt.

In einer weiteren Verbesserung ist vorgesehen, dass sich zwischen dem Vorsprung und dem zylindrischen Abschnitt, insbesondere zwischen der Anlageschulter und dem zylindrischen Abschnitt ein sich verjüngender Abschnitt, insbesondere ein Konus vorgesehen ist, der bevorzugt ebenfalls in dem einen Kaltumformbearbeitungsschritt in den Einstellstift eingearbeitet wird. Der vorgenannte Konus ist in Einbaurichtung dem zylindrischen Abschnitt voreilend und erleichtert so das Einführen des zylindrischen Abschnittes in dem Presssitz. Die Presspassung ergibt sich im zylindrischen Abschnitt und der in Einbaurichtung davor angeordnete (Einführ-) Konus erleichtert die Montage.

Der erfindungsgemäß vorgeschlagene Elektromagnet wird bevorzugt in einem Druckregelventil und hier insbesondere in einem Proportionaldruckregelventil eingesetzt. Bei einem Proportionaldruckregelventil steht der Druck zumindest in gewissen Bereichen in einem proportionalen Verhältnis zu einer Regelgröße, zum Beispiel Stromstärke des durch die Spule des Elektromagneten fließenden Stromes. Geschickterweise ist daher der Elektromagnet als Elektroproportionalmagnet ausgebildet und weist zumindest abschnittsweise eine entsprechende Proportionalität bzw. sonstigen Kennlinienverlauf wie gewünscht auf. Gerade, um diesen Kennlinienverlauf einstellen zu können, ist der vorgeschlagene Einstellstift gemäß der Erfindung vorgesehen.

Der erfindungsgemäße Elektromagnet eignet sich insbesondere für die Verwendung mit einem ebenfalls erfindungsgemäßen Druckregelventil. Hierbei wird der über die Ankerfeder und die elektromagnetische Beaufschlagung der Spule betätigbare Anker mit einer Betätigungsstange verbunden, die auf die Schließglieder des Ventilteils einwirkt und diese von einer ersten in eine zweite Verschlussposition bewegt. Die Justage der Kennlinie des Druckregelventils erfolgt hierbei über den Einstellstift, der bis zum Erreichen der optimalen Kennlinie, die in einem Prüfungsverfahren ermittelt wird, in den Elektromagneten bzw. das den Elektromagneten überspannende Joch eingedrückt wird. Hierbei kommt es zu einer Kompression der Ankerfeder und damit zur Verschiebung des Ankers im Ankerraum. Hierüber kann wiederum die Einwirkung auf die Schließteile des Druckregelventils justiert werden.

In diesem Zusammenhang wird insbesondere darauf hingewiesen, dass alle im Bezug auf den Elektromagneten beschriebenen Merkmale und Eigenschaften, aber auch Verfahrensweisen, sinngemäß auch bezüglich der Formulierung der erfindungsgemäßen Verwendung eines in einem Kaltumformverfahren hergestellten Einstellstiftes in einem Elektromagneten übertragbar und im Sinne der Erfindung einsetzbar und als mitoffenbart gelten. Gleiches gilt auch in umgekehrter Richtung, das bedeutet, nur im Bezug auf die Verwendung genannte, bauliche, also vorrichtungsgemäße Merkmale können auch im Rahmen der Ansprüche für den Elektromagneten berücksichtigt und beansprucht werden und zählen ebenfalls zur Erfindung und zur Offenbarung.

In der Zeichnung ist die Erfindung insbesondere in einem Ausführungsbeispiel schematisch dargestellt. Es zeigen:
- Fig. 1: ein Druckregelventil in seitlicher Schnittdarstellung mit erfindungsgemäßem Elektromagnet,
- Fig. 2: den Einstellstift in Schnittdarstellung gemäß der Erfindung.

In den Figuren sind gleiche oder einander entsprechende Elemente jeweils mit den gleichen Bezugszeichen bezeichnet und werden daher, sofern nicht zweckmäßig, nicht erneut beschrieben.

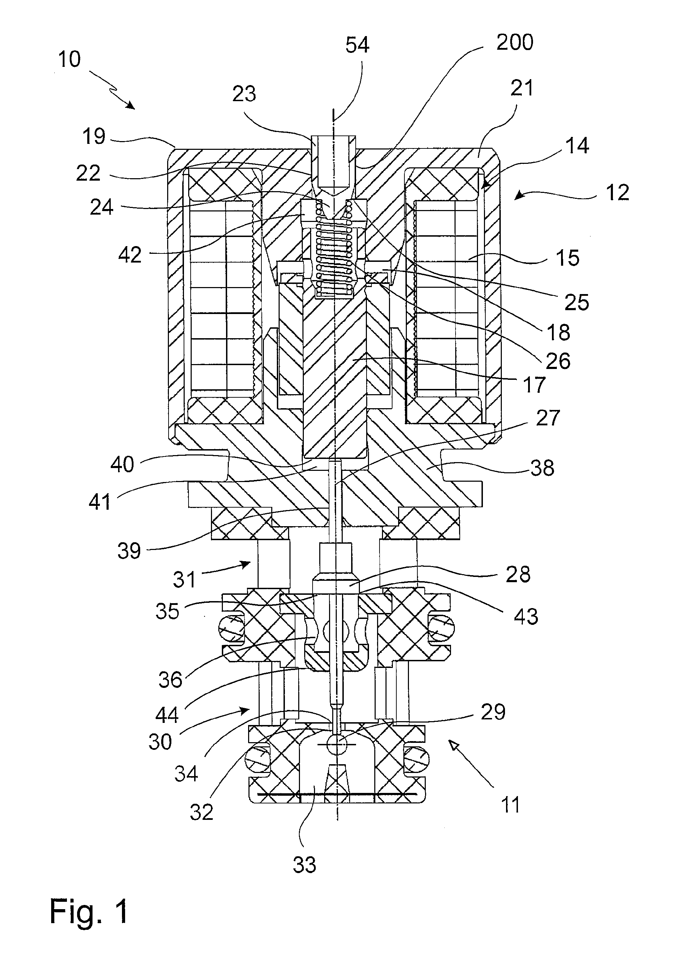

Fig. 1 zeigt eine mögliche Ausführungsform eines elektromagnetischen Druckregelventils 10, bestehend aus einem Ventilteil 11 und einem koaxial dazu angeordneten Magnetteil 12. Das Magnetteil 12 weist einen Spulenkörper mit einer Spule 15 auf. In dem Spulenkörper 14 ist ein Anker 17 in einem Ankerraum 18 beweglich gelagert. An der Oberseite 19 des Magnetteils 12 schließt sich ein (nicht gezeigtes) Steckergehäuse an, über das eine Stromversorgung der Spule 15 erfolgen kann. Im Joch 21 des Magnetteils 12 befindet sich eine Ausnehmung 22, in der ein Einstellstift 23 eingesetzt ist. Das Joch 21 liegt auf der dem Ventilteil 11 abgewandten Seite des Ankers 17. Somit befindet sich auch der Einstellstift 23 und die Ankerfeder 26 auf der dem Ventilteil 11 abgewandten Seite des Ankers 17. Der Einstellstift 23 ist in der Ausnehmung 22 in einem Presssitz 200 gehalten. Der Einstellstift 23 weist eine vorspringende Nase 24 auf, zudem verfügt der Einstellstift 23 über eine Schulter 25, auf der sich eine Ankerfeder 26 abstützt. An ihrem gegenüberliegenden Ende stützt sich die Ankerfeder 26 auf dem Anker 17 ab. Für Einstellzwecke ist der Einstellstift 23 in Richtung der Bewegungsrichtung des Ankers 17 im Presssitz 200 beweglich, wobei natürlich eine entsprechende Kraft aufgewandt werden kann, um die Haltekräfte im Presssitz 200 zu überwinden. Diese Haltekräfte sind natürlich um einiges größer als die beim Betrieb des Elektromagneten üblicherweise auftretenden axialen Kräfte der Ankerfeder 26.

Bei Strombeaufschlagung der Spule 15 wird der Anker 17 entgegen der Federkraft der Ankerfeder 26 im Ankerraum 18 verschoben. Wird die Strombeaufschlagung der Spule 15 beendet, führt die Ankerfeder 26 den Anker 17 in die Ausgangsposition zurück. Der Anker 17 verfügt über eine Betätigungsstange 27, die mit dem ersten Schließteil 28 des Ventilteils 11 verbunden ist. In der in Fig. 1 dargestellten Ausführungsform des Druckregelventils 10 ist dieses in einer ersten, Ruheposition dargestellt. Hierbei verschließt das erste Schließteil 28 eine Durchgangsöffnung im Ventilteil 11. Im unteren, zweiten Teil 30 des Ventilteils 11, das über eine Schraubverbindung mit dem Mittelteil 31 verbunden ist, befindet sich ein Ventilsitz 32 für ein zweites Schließteil 29. Die Betätigungsstange 27 des Ankers 17 setzt sich nach dem ersten Schließteil 28 in axialer Richtung des elektromagnetischen Druckregelventils 10 fort und bildet hierbei einen Stößel aus, der auf das zweite Schließteil 29 einwirkt. Bei Strombeaufschlagung der Spule 15 wird der Anker 17 aus der in Fig. 1 dargestellten Position entgegen der Federkraft der Ankerfeder 26 bewegt und hebt dabei den Stößel vom zweiten Schließteil 29 ab. Aufgrund des über die Zuflussöffnung 33 einströmenden Mediums, wird das zweite Schließteil 29 in den Ventilsitz 35 gepresst und dadurch die Öffnung 34 verschlossen, der Medienfluss somit getrennt. Durch die Bewegung des Ankers 17 wird das erste Schließteil 28 aus dem Ventilsitz 35 gehoben und gibt somit den Durchfluss frei.

Das in das untere Ventilteil 30 einströmende Medium kann nur durch Bohrungen 36 in einem sich unterhalb des ersten Ventilsitzes 35 anschließenden Käfig 44 in die durch das aus dem Ventilsitz angehobene Schließteil 28 freigegebene Öffnung 43 einströmen. Das hier gezeigte Druckregelventil funktioniert nach dem Druckteilungsprinzip, wobei die eigentliche Druckregelung am ersten Sitzventil (gebildet vom ersten Schließteil 28 und ersten Ventilsitz 35) erfolgt. Dabei ist das zweite (bezogen auf die Strömungsrichtung des Mediums erste) Sitzventil (gebildet von zweitem Schließteil 29 und zweitem Ventilsitz 32) geöffnet.

Direkt unterhalb der Spule 15 schließt sich der Kern 38 des Elektromagneten an, der eine Durchdringungsbohrung 39 aufweist, durch die die Betätigungsstange 27 geführt ist. Zwischen dem unteren, dem Ventilteil 11 zugewandten Ende 40 des Ankers und dem Kern 38 besteht in axialer Richtung ein Arbeitsspalt 41.

Ein weiterer Arbeitsspalt 42 besteht zwischen dem dem Joch 21 zugewandten Ende des Ankers 17 und dem Joch. In der nichtbestromten Ruhestellung des Magnetteils 12 ist dieser Spalt 42 geöffnet.

Die Ankerfeder 26 stützt sich einerseits auf einer an dem Einstellstift 23 vorgesehenen Schulter 25 ab, andererseits auf dem Anker 17. Zur stabileren Abstützung der Ankerfeder 26 weist der Einstellstift 23 eine vorspringende Nase bzw. einen Vorsprung 24 auf, der von den Windungen der Ankerfeder 26 teilweise umschlossen wird. Das zweite freie Ende der Ankerfeder 26 stützt sich auf einer im Anker 17 vorgesehenen Abstützfläche auf diesem ab.

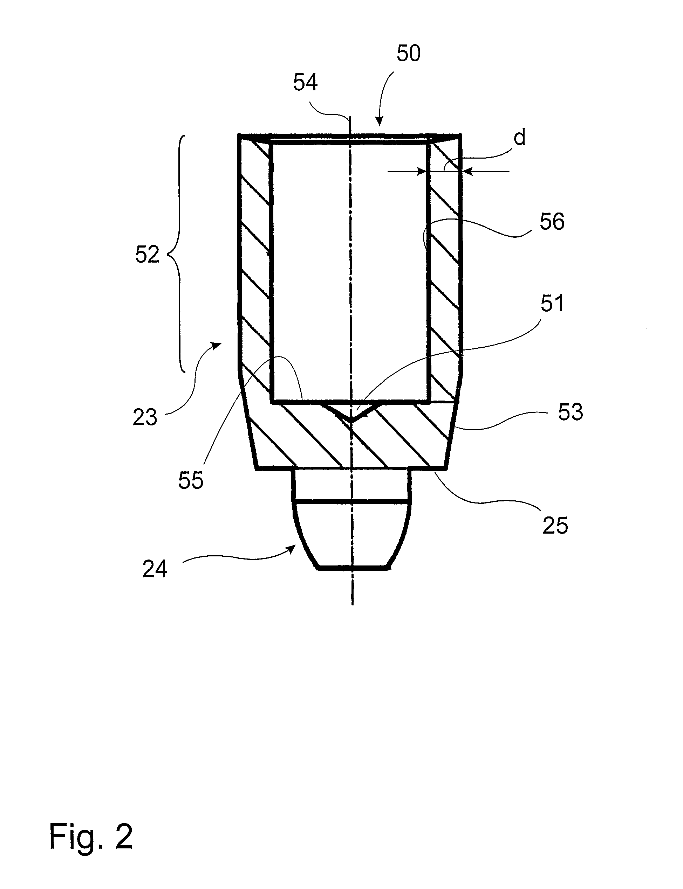

Fig. 2 zeigt eine mögliche Ausgestaltung des Einstellstiftes 23. Dieser ist in einem Kaltmassivumformverfahren aus einem Werkstückrohteil gebildet worden. Das ist z.B. ein Abschnitt einer im Querschnitt bevorzugt runden Profil- oder Stangenware aus Metall, wobei z.B. hierzu Eisen, Stahl oder Aluminium verwendbar ist.

Hierzu dient ein entsprechendes Presswerkzeug. Ein Pressstempel wirkt dabei derart auf das Rohwerkstück ein, dass es zu einer Verformung kommt. Das Werkzeug ist dabei so ausgebildet, dass im Zuge der Verformung der nasenartige Vorsprung 24 in Längsrichtung (bzw. Achsrichtung, durch die Mittelachse 54 des Einstellstiftes 23 angegeben, die bevorzugt im Wesentlichen parallel ist zur Bewegungsrichtung des Ankers 17) am Rohteil gebildet wird. Hierzu wird das Rohteil vom dem Pressstempel des Presswerkzeuges in eine entsprechende Matrize gepresst. Die Mittelachse 54 ist parallel zur Bewegungsrichtung des Ankers 17 und zur Bewegungsrichtung des Einstellstiftes 23 im Presssitz 200. Im Zuge der Verformung wird auch die Ausnehmung 50 im Einstellstift 23 gebildet. Die Ausnehmung 50 befindet sich dabei auf der dem Vorsprung 24 gegenüberliegenden Seite. Die Ausnehmung 50 erstreckt sich dabei zumindest im zylindrischen Bereich 52 des Einstellstiftes 23. Zumindest einige Teile des zylindrischen Bereiches 52 bilden im Wesentlichen die Mantelfläche des Einstellstiftes 23, die in der Ausnehmung 22 des Joches 21 im Presssitz 200 eine mechanisch ausreichend feste Verbindung bildet.

Aufgrund der im Bereich der Ausnehmung 50 durch die Kaltumformung entstandenen Verringerung der Wandstärke d des Einstellstiftes 23 wird dieser Teil des Einstellstiftes 23 in Grenzen verformbar, was ein Einsetzen in eine entsprechende Ausnehmung 22 im Joch 21 eines Elektromagneten begünstigt. Der Einstellstift 23 kann hier im Presssitz 200 gehalten werden.

Der Einstellstift 23 weist zudem eine Anlageschulter oder Schulter 25 auf, auf der sich die Ankerfeder 26 abstützen kann. Der nasenartige Vorsprung 24 bzw. Nippel steht dabei teilweise in die Ankerfeder 26 ein. Hierdurch wird die Ankerfeder 26 in ihrer Position im Elektromagneten stabilisiert. Die Schulter 25 ist dabei als flanschartige Ringfläche ausgebildet. Sie erstreckt sich in Richtung der Mittelachse 54 gesehen nach dem zylindrischen Bereich 52 und dem Einführkonus 53, vor dem Vorsprung 24. Die konische Form des Nippels 24 ergibt sich aufgrund der Ausgestaltung des für die Herstellung des Einstellstiftes 23 verwendeten Werkzeuges. Neben der hier dargestellten konischen oder kegelstumpfartigen Ausführung besteht selbstverständlich auch die Möglichkeit, den Vorsprung 24 bzw. Nippel nach Art eines Zylinders oder auch kegelartig, ballig oder sphärisch (z.B. von einer Kugelform abweichend) auszubilden.

Die Ausnehmung 50 ist nicht durch Zerspanung, sondern durch (Kalt-) Umformung gebildet. Sie ist in Längsrichtung der Mittelachse 54, hierzu bevorzugt koaxial, als Sackloch ausgebildet.

Im Inneren der Ausnehmung 50, am Sacklochboden 55 ist eine kegelförmige Einprägung 51 erkennbar. Diese ergibt sich ebenfalls aufgrund des Umformvorganges. Gleichzeitig dient diese Einkerbung bzw. Vertiefung dazu, das Werkzeug aufzunehmen, das für Einsetzen bzw. Einpressen des Einstellstiftes 23 in dem Elektromagneten bzw. dessen Joch 21 Verwendung findet. Die Einkerbung bzw. Vertiefung verhindert hierbei wirkungsvoll ein Verrutschen bzw. eine Verschiebung des Werkzeuges im Einstellstift 23. Dieses Werkzeug weist in der Regel einen Durchmesser auf, der kleiner ist als der Durchmesser der Ausnehmung 50, um hier das elastische Verformen des Einstellstiftes 23 während des Einpressvorganges in den Elektromagneten zu begünstigen.

Die Innenwandung bzw. Mantelfläche 56 der Ausnehmung 50 kann durch den (Kalt-) Umformvorgang an gewissen Bereichen gezielt geschwächt werden, z.B. durch eine parallel zur Mittelachse 54 verlaufende Riefe oder Rille, um so den zylindrischen Abschnitt 52 "weicher" für das Einpressen in den Presssitz 200 zu gestalten.

Das Einsetzen des Einstellstiftes 23 in dem Elektromagneten bzw. einer dort vorgesehenen Ausnehmung 22 wird zusätzlich durch das konische Zulaufen der äußeren Wandung des Einstellstiftes 23 im Bereich zwischen dem zylindrischen Abschnitt 52 und der Schulter 25 verbessert. Aufgrund des hierdurch reduzierten Durchmessers, kann der Einstellstift 23 besonders einfach in die Ausnehmung 22 eingeführt werden. Die Abschrägung bzw. der Konus 53 dient somit der Führung des Einstellstiftes 23. Aufgrund der Kaltumformung eines Rohwerkstückes verändert sich dessen Länge. Gleichzeitig wird die Materialstärke im Bereich des Nippels 24 bzw. des sich daran anschließenden unteren Bereichs des Einstellstiftes 23 erhöht.

Der in Fig. 2 dargestellte Einstellstift 23 kann in einem einzigen Arbeitsschritt hergestellt werden. Das spanabhebende Vorbereiten eines Rohwerkstückes, beispielsweise eines Rundstabes oder eines sonstigen zylinderförmigen Rohlings und das anschließende Einbringen einer Bohrung in der Rückseite entfällt. Statt dessen wird die Ausnehmung 50 in einem Arbeitsgang mit dem Nippel 24 bzw. Vorsprung oder durchmesserreduzierten Fortsatz gefertigt, sodass hierdurch die Kosten für den Einstellstift 23 insgesamt verringert werden können. Verringerte Kosten für den Einstellstift reduzieren insgesamt die Kosten für die Herstellung eines mit dem Einstellstift 23 versehenen Elektromagneten. Als Material für die Herstellung des Einstellstiftes eignen sich sämtliche für eine Kaltmassivumformung geeigneten Werkstoffe, wie beispielsweise niedrig legierte Stähle und verschiedene nicht Eisen-Metalle, insbesondere Aluminium und Kupfer.

Verglichen mit der Warmmassivumformung bzw. einer spanenden oder drehenden Bearbeitung des Einstellstiftes 23 ist die Form-und Maßhaltigkeit der kaltumgeformten Einstellstifte 23 erheblich größer. Es tritt hier kein Schwinden beim Abkühlen auf. Auch treten keine oder nur geringe Toleranzen verglichen mit einer spanabhebenden Bearbeitung bei dieser Art der Materialumformung auf. Weil sich der Werkstoff, aus dem der Einstellstift 23 gebildet ist, beim Pressen im kalten Zustand verfestigt, können bei der Kaltmassivumformung beispielsweise höherlegierte Stahlqualitäten durch kostengünstigere Werkstoffe ersetzt werden.

Die Spannungsverteilung im Einstellstift 23 ist aufgrund der rotationssymetrischen Form gut beherrschbar. Aufgrund des bloßen Umformens des Materials, kommt es, anders als bei spanabhebenden Verfahren, die herkömmlicherweise für die Herstellung des Einstellstiftes 23 verwendet werden, zu einer vergleichsweise hohen Materialersparnis und zudem zu der zuvor bereits ausgeführten Einsparung bei der Bearbeitungszeit, da durch das Pressen eine wesentlich erhöhte Bearbeitungsgeschwindigkeit erzielt wird. Ebenfalls aufgrund des nur einen Schritt aufweisenden Verformungsvorganges entfällt die nachfolgende Bearbeitung beispielsweise Oberflächenpolierung oder dergleichen.

Bei der Massivumformung wird ein Rohwerkstück zwischen einem Pressstempel und einer Matrize mit erheblichen Drücken verformt und dadurch der den Rohling bildende Werkstoff gezwungen, in den Freiraum zwischen Matrize und Stempel zu fließen. Zur Herstellung des in Fig. 2 dargestellten Einstellstiftes weist die Matrize einen Hohlraum auf, der sich napfartig verjüngt. In dieser napfartigen Verjüngung wird der Nippel 24 im Verlauf des Umformungsvorganges gebildet, da das beim Pressen verdrängte Material in diese napfartige Vertiefung der Matrize einfließt. Gleichzeitig fließt das übrige Material in den Hohlraum zwischen Matrizeninnenseite und auf das Rohwerkstück aufgepresstem Stempel, sodass es hier zu einer Materialverjüngung und damit zur Ausbildung der Umfangswand des Einstellstiftes 23 kommt. Es wird hierdurch die Wandstärke d und damit die Materialstärke des Werkstückes verringert, die Länge des Einstellstiftes 23 insgesamt jedoch verlängert.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden, oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden bzw. im Zusammenhang mit anderen Merkmalen besonders günstige Ergebnisse erreichen.

## Patentansprüche

1. Elektromagnet mit einer mit Strom beaufschlagbaren Spule, einem in einem Ankerraum beweglich gelagerten Anker, der durch ein sich aus der Strombeaufschlagung der Spule ergebendes Magnetfeld bewegbar ist, einem Magnetjoch, eine Ankerfeder und einem im Magnetjoch einsetzbaren Einstellstift, wobei sich die Ankerfeder einerseits am Einstellstift andererseits am Anker abstützt und über eine Eindringtiefe des Einstellstiftes in das Magnetjoch beziehungsweise den Elektromagneten die Kennlinie des Elektromagneten einstellbar ist, wobei als Einstellstift (23) ein mittels Kaltumformung gebildetes Bauteil vorgesehen ist.

2. Elektromagnet nach Anspruch 1, **dadurch gekennzeichnet, dass** der Einstellstift (23), ausgehend von einem, insbesondere als Abschnitt einer Profil- oder Stangenware ausgebildeten Rohteil, einen, in dem Kaltumformungsschritt erzeugbaren, sich insbesondere in Längsrichtung des Einstellstiftes (23) erstreckenden Vorsprung (24) aufweist.

3. Elektromagnet nach Anspruch 1 oder 2, **dadurch gekennzeichnet, dass** der Vorsprung (24) einen geringeren Durchmesser aufweist als der restliche Einstellstift (23).

4. Elektromagnet nach einem der vorhergehenden Ansprüche, **dadurch gekennzeichnet, dass** der Vorsprung (24) konusartig, kegelartig, kegelstumpfartig, nippelartig, ballig, sphärisch oder zylindrisch ausgebildet ist.

5. Elektromagnet nach einem der vorhergehenden Ansprüche, **dadurch gekennzeichnet, dass** der Vorsprung (24) der Führung bzw. Zentrierung der Ankerfeder (26) dient.

6. Elektromagnet nach einem der vorhergehenden Ansprüche, **dadurch gekennzeichnet, dass** der Einstellstift (23) auf der dem Vorsprung (24) gegenüberliegenden Seite eine als Sackloch ausgebildete Ausnehmung (50) aufweist.

7. Elektromagnet nach einem der vorhergehenden Ansprüche, **dadurch gekennzeichnet, dass** sich zumindest im Bereich der Ausnehmung (50) ein zylindrischer Abschnitt (52) an dem Einstellstift (23) befindet und der Einstellstift (23) eine bei der Kaltumformung ausgebildete Materialschwächung der Wandstärke der die Ausnehmung (50) begrenzenden Wand aufweist.

8. Elektromagnet nach einem der vorhergehenden Ansprüche, **dadurch gekennzeichnet, dass** zwischen dem zylindrischen Abschnitt (52) und dem Vorsprung (24) eine Anlageschulter (25), insbesondere für die Ankerfeder (26) vorgesehen ist.

9. Elektromagnet nach einem der vorhergehenden Ansprüche, **dadurch gekennzeichnet, dass** die Einformung der Ausnehmung (50), die Ausformung des Vorsprungs (24) sowie der Anlageschulter (25) in einem einzigen Arbeitsschritt der Kaltumformung, insbesondere ausgehend von einem als Abschnitt eines Profil- oder Stangenware ausgebildeten Rohteils erfolgt.

10. Elektromagnet nach einem der vorhergehenden Ansprüche, **dadurch gekennzeichnet, dass** sich zwischen dem Vorsprung (24) und dem zylindrischen Abschnitt (52), insbesondere zwischen der Anlageschulter (25) und dem zylindrischen Abschnitt (52) ein sich verjüngender Abschnitt (53), insbesondere ein Konus (53) vorgesehen ist, der bevorzugt ebenfalls in dem einen Kaltumformungsarbeitsschritt in den Einstellstift (23) eingearbeitet wird.

11. Elektromagnet nach einem der vorhergehenden Ansprüche, **dadurch gekennzeichnet, dass** der Elektromagnet als Elektroproportionalmagnet ausgebildet ist.

12. Verwendung eines in einem Kaltumformverfahren hergestellten Einstellstiftes in einem Elektromagneten.

13. Verwendung nach Anspruch 12, **dadurch gekennzeichnet, dass** der Einstellstift (23) im Presssitz (200) des Elektromagneten einsetzbar und für Einstellzwecke der Kennlinie des Elektromagneten im Presssitz (200) lageveränderbar ist.

14. Druckregelventil, insbesondere Proportionaldruckregelventil, mit einem Elektromagneten nach einem der Ansprüche 1 bis 11 und einem Ventilteil, das zumindest einem von einem Schließteil verschließ- oder öffenbare Durchgangsöffnung aufweist und das Schließteil im Wirkkontakt mit dem Anker des Elektromagneten steht.
